# EUROPÄISCHE PATENTSCHRIFT

(11) **EP 2 923 793 B1**
(45) Veröffentlichungstag und Bekanntmachung des Hinweises auf die Patenterteilung: **22.03.2017**
(21) Anmeldenummer: 15157593.3
(22) Anmeldetag: 04.03.2015
(51) Int. Cl.: B23P 9/02, B21C 37/30, B24B 39/02, F16C 9/04, F16C 33/08, F16C 33/14

(54) **Kalibriervorrichtung und Kalibrierverfahren zum Kalibrieren einer Lageröffnung eines Werkstücks**
Calibration device and calibration method for calibrating a bearing hole of a workpiece
Dispositif et procédé d'étalonnage d'une ouverture de palier d'une pièce

(30) Priorität: 19.03.2014 DE 102014003983
(43) Veröffentlichungstag der Anmeldung: 30.09.2015
(73) Patentinhaber: Alfing Kessler Sondermaschinen GmbH, 73433 Aalen (DE)
(72) Erfinder: Retzler, Peter, 73574 Iggingen (DE); Müllner, Ralf, 73760 Ostfildern (DE)
(74) Vertreter: Patentanwälte Bregenzer und Reule Partnerschaftsgesellschaft mbB

(56) Entgegenhaltungen:
- WO-A1-2012/130738
- DE-A1-102012 015 308
- US-A- 4 771 627

## Beschreibung

Die Erfindung betrifft eine Kalibriervorrichtung zum Kalibrieren einer Lageröffnung eines Werkstücks gemäß Oberbegriff des Anspruches 1.

Die Erfindung betrifft ferner ein Kalibrierverfahren gemäß Oberbegriff des Anspruches 15.

Eine derartige Kalibriervorrichtung und ein derartiges Kalibrierverfahren gehen aus WO 2012/130738 A1 hervor.

Die bekannten Kalibrierwerkzeuge eignen sich dazu, beispielsweise Lagerhülsen oder Lagerbuchsen eines Pleuels zu kalibrieren, das heißt den Innenumfang der Lageröffnung exakt einzustellen und dabei gleichzeitig die Lagerbuchse nach radial außen zu drücken, so dass sie in einer Bohrung, zum Beispiel dem kleinen oder großen Auge des Pleuels, fest sitzen. Im einfachsten Fall wird z.B. eine Kugel als Kalibrierwerkzeug durch eine eingebaute Lagerbuchse oder Hülse durchgedrückt. Der Außendurchmesser des Kalibrierwerkzeugs ist größer als der Innendurchmesser der Lagerbuchse. Das oder ein Kalibrierwerkzeug werden auch mehrfach in die Lagerbuchse eingeführt. Beim Kalibrieren erfolgt eine radiale und axiale Umformung der Lagerbuchse, insbesondere an den Kontaktflächen zur Kalibrierkontur des Kalibrierkörpers, so dass das Material der Lagerbuchse verdichtet wird und sie zudem fester in der Bohrung des Werkstücks, z.B. des Pleuels, sitzt.

Die Kalibrierung setzt jedoch auf Seiten der Lagerbuchse und auf Seiten des Kalibrierwerkzeugs unter anderem eine hohe Maßgenauigkeit voraus. Dennoch kommt es in der Praxis zu Rissbildung, also einem Aufreißen der Oberfläche der Lagerbuchse, z.B. wegen verschiedener mechanischer oder physikalischer Eigenschaften von Lager- und Trägermaterialien der Lagerbuchse, wenn diese mehrkomponentig oder mehrschichtig ist. Beim Kalibrieren wird ferner auf das zu kalibrierende Material der Lagerbuchse nicht nur radial sondern auch axial Kraft ausgeübt, so dass das Material in radialer und in axialer Richtung verdrängt und umgeformt wird. Wenn der axiale Schub die Zugfestigkeit des Materials der Lagerbuchse überschreitet, reißt die Oberfläche der Lagerbuchse auf, besonders bei radial mehrlagigen Buchsen, bei denen der Werkstoff des Lagerbuchsengrundkörpers meist einen deutlich geringeren Elastizitätsmodul als der Lagerwerkstoff aufweist und die Lagerwerkstoffschicht nur dünn ausgeführt ist, oft weniger als einen Millimeter. Der Lagerwerkstoff ist an der Lager-Innenkontur vorgesehen.

Es ist daher die Aufgabe der vorliegenden Erfindung, eine verbesserte Kalibriervorrichtung sowie ein verbessertes Kalibrierverfahren bereitzustellen.

Diese Aufgabe wird durch eine Kalibriervorrichtung bzw. ein Kalibrierverfahren mit den Merkmalen des Anspruches 1 bzw. 15 gelöst.

Zur Lösung der Aufgabe bei einer Kalibriervorrichtung der eingangs genannten Art vorgesehen, dass die Kalibrierwerkzeuge ein erstes Kalibrierwerkzeug und ein zweites Kalibrierwerkzeug umfassen, und dass sie eine Positioniereinrichtung zum Positionieren des Werkstücks und der Kalibrierwerkzeuge bezüglich der Kalibrierungsbahn relativ zueinander aufweist derart, dass das erste Kalibrierwerkzeug und das zweite Kalibrierwerkzeug von entgegengesetzten Seiten her in die Lageröffnung hinein bewegt werden.

Das erfindungsgemäße Kalibrierverfahren zum Kalibrieren einer Lageröffnung eines Werkstücks, insbesondere eines Motorbauteils, zum Beispiel eines Pleuels, mit einer Kalibriervorrichtung, die Kalibrierwerkzeuge aufweist, die ihrem Außenumfang mindestens eine Kalibrierkontur aufweisen, mit der eine als Lagerfläche dienende Lager-Innenkontur der Lageröffnung kalibrierbar ist, wobei bei dem Kalibrierverfahren zum Kalibrieren der Lageröffnung die mindestens eine Kalibrierkontur durch eine Vorschubbewegung entlang einer Kalibrierungsbahn an der Lager-Innenkontur entlang bewegt wird, sieht ein Positionieren des Werkstücks und der Kalibrierwerkzeuge bezüglich der Kalibrierungsbahn relativ zueinander anhand einer Positioniereinrichtung vor, wobei ein erstes Kalibrierwerkzeug und ein zweites Kalibrierwerkzeug der Kalibrierwerkzeuge von entgegengesetzten Seiten her in die Lageröffnung hinein bewegt werden.

Es ist ein Grundgedanke der vorliegenden Erfindung, dass nicht nur ein Kalibrierwerkzeug oder eine Anordnung mehrerer, beispielsweise hintereinander angeordneter erster Kalibrierwerkzeuge oder Kalibrierkonturen, von jeweils derselben Seite her in die Lageröffnung eingeführt wird, sondern dass auch eine Kalibrierung von der Gegenrichtung her durchgeführt wird, wofür ein zweites Kalibrierwerkzeug oder eine Anordnung mehrerer zweiter Kalibrierwerkzeuge, zum Beispiel hintereinander angeordneter Kalibrierkonturen vorgesehen ist. In der nachfolgenden Beschreibung soll "erstes Kalibrierwerkzeug" als eine Kalibrierung von der "ersten Kalibrierrichtung" her verstanden werden, "zweites Kalibrierwerkzeug" als eine Kalibrierung von der entgegengesetzten Seite der Lageröffnung her, also in der "zweiten Kalibrierrichtung" verstanden werden.

Das Kalibrierverfahren und die Kalibriervorrichtung gemäß der vorliegenden Erfindung kompensieren beim Kalibrieren anhand des ersten Kalibrierwerkzeugs entstehende Fehler, insbesondere auch Auswölbungen, die dadurch entstehen, dass das erste Kalibrierwerkzeug möglicherweise im Eintrittsbereich in die Lageröffnung nicht ausreichend abgestützt ist. Gerade bei so genannten Korbhenkel-Pleueln beginnt die Kalibrierung anhand des ersten Kalibrierwerkzeugs in einem Bereich der Lageröffnung, wo das Kalibrierwerkzeug gegenüberliegend zu dem zu kalibrierenden Bereich der Lageröffnung noch nicht abgestützt ist. Die Lageröffnung hat nämlich in der Seitenansicht einen Schrägverlauf. Im weiteren Verlauf des Kalibriervorgangs durch das erste Kalibrierwerkzeug, wenn dieses allseitig in der Lageröffnung abgestützt ist, ist die Kalibrierwirkung jedoch einwandfrei.

Wenn dann erfindungsgemäß von der entgegengesetzten zweiten Seite her das zweite Kalibrierwerkzeug durch die Lageröffnung hindurchgeführt wird, gleicht dieses beim ersten Kalibriervorgang anhand des ersten Kalibrierwerkzeugs entstehende Fehler, insbesondere Vertiefungen oder Wölbungen, wieder aus. Das Arbeitsergebnis ist anhand der erfindungsgemäßen Kalibrierung deutlich verbessert.

Durch die Änderung der Kalibrierrichtung ist die Gefahr des Überstreckens des Lagermaterials und damit der Rissbildung im kalibrierten Material verringert. Daher sind höhere Kalibrierkräfte als beim Kalibrieren nur von einer Seite her möglich. Insbesondere zu den freien Seiten der Lageröffnung hin ist das Ergebnis der Kalibrierung deutlich verbessert.

Die Kalibrierungsbahn ist z.B. eine lineare oder gekrümmte Vorschubachse, in der das Kalibrierwerkzeug und das Werkstück relativ zueinander bewegt werden, z.B. das Kalibrierwerkzeug bezüglich des Werkstücks oder umgekehrt oder beides. Die Kalibrierungsbahn verläuft in der Regel geradlinig, verläuft also entlang einer Kalibrierungsachse oder bildet eine Kalibrierungsachse.

Die Lageröffnung dient beispielsweise als Lageraufnahme für ein Drehlager und/oder für ein Schiebelager, z.B. einer Kurbelwelle.

Die Lageröffnung ist vorteilhaft an einer Lagerbuchse vorgesehen, die in einer Lageraufnahme eines Grundkörpers des Werkstücks, insbesondere eines Motorbauteils, aufgenommen ist. Ein bevorzugtes Anwendungsgebiet der Erfindung sind Motorbauteile, z.B. Pleuel, Motorgehäuse oder dergleichen.

Zweckmäßigerweise hat die zu kalibrierende Lageröffnung bezüglich der Kalibrierungsbahn bzw. ihrer Längserstreckungsrichtung einen gleichen Durchmesser oder eine gleiche Innenkontur, ist also zylindrisch. Bevorzugt ist das Kalibrierwerkzeug an seinem Außenumfang kreisrund, d.h. zur Kalibrierung einer Lageröffnung mit einem kreisrundem Innenumfang vorgesehen. Es kann selbstverständlich auch eine andere als eine kreisrunde Außenkontur der Kalibrierkontur und/oder der Nebenkalibrierkontur vorgesehen sein, z. B. wenn ein Schiebelager zu kalibrieren ist.

Bevorzugt hat die Kalibriervorrichtung mindestens einen Werkzeugträger zum Tragen des Kalibrierwerkzeugs, wobei das Kalibrierwerkzeug zweckmäßigerweise lösbar an dem Werkzeugträger angeordnet ist. Es ist aber auch möglich, dass das Kalibrierwerkzeug fest am Werkzeugträger angeordnet ist. Das lösbare Kalibrierwerkzeug kann bei Verschleiß ausgetauscht werden. Auch eine Anpassung an andere Lagerkonturen ist ohne weiteres möglich. Der Werkzeugträger ist beispielsweise stangenartig und/oder weist einen Dorn auf.

An dem Werkzeugträger können beispielsweise zwei oder weitere Kalibrierwerkzeuge angeordnet sein. Somit kann also bezüglich der Kalibrierungsbahn die Kalibrierung durch zwei oder weitere Kalibrierwerkzeuge durchgeführt werden. Beispielsweise sind zwei erste Kalibrierwerkzeuge hintereinander an dem Werkzeugträger angeordnet, so dass sie nacheinander bei einer Linearbewegung des Werkzeugträgers in die Lageröffnung hinein oder durch diese hindurch in Eingriff mit der Lageröffnung gelangen und diese kalibrieren.

Die Positioniereinrichtung umfasst beispielsweise eine Werkzeug-Positioniereinrichtung, die mindestens eines der Kalibrierwerkzeuge, beispielsweise das erste Kalibrierwerkzeug oder das zweite Kalibrierwerkzeug oder beide Kalibrierwerkzeuge, relativ zu dem Werkstück positioniert. Die Werkzeug-Positioniereinrichtung umfasst beispielsweise einen oder mehrere Linearantriebe, um ein jeweiliges Kalibrierwerkzeug in die Lageröffnung hinein zu verstellen und daraus wieder heraus.

Es ist aber auch eine Werkstück-Positioniereinrichtung möglich, die das Werkstück relativ zu dem ersten oder dem zweiten Kalibrierwerkzeug verstellt. Beispielsweise ist dann das jeweilige erste oder zweite Kalibrierwerkzeug ortsfest, während die Werkstücke-Positioniereinrichtung das Werkstück zum Kalibrierwerkzeug bewegt. Kombinationen sind ebenfalls möglich, das heißt dass beispielsweise eines der beiden Kalibrierwerkzeuge, zum Beispiel das erste Kalibrierwerkzeug, ortsfest ist, d.h. dass die Werkstück-Positioniereinrichtung das Werkstück zu diesem ersten Kalibrierwerkzeug für den Kalibriervorgang hinbewegt und anschließend wieder davon weg. Im zweiten Schritt führt dann eine Werkzeug-Positioniereinrichtung das zweite Kalibrierwerkzeug in die Lageröffnung hinein.

Das erste Kalibrierwerkzeug und das zweite Kalibrierwerkzeug sind beispielsweise konturgleich oder baugleich. Es ist aber auch möglich, dass das erste und das zweite Kalibrierwerkzeug voneinander verschieden sind, beispielsweise verschiedene Konturen aufweisen.

Es kommen unterschiedliche Kalibrierkonturen infrage, das heißt dass beispielsweise ein Kalibrierwerkzeug eine schraubenförmige Kalibrierkontur aufweist, während ein anderes Kalibrierwerkzeug, zum Beispiel das zweite Kalibrierwerkzeug, eine kugelsegmentartige Außenoberfläche hat. Die Kalibrierkontur eines Kalibrierwerkzeugs kann aber auch ein zylindrisch sein, eine Facettierung aufweisen oder verrundete Eckbereiche haben. Vorteilhaft ist es, wenn die jeweiligen Endbereiche einer schraubenförmigen oder zylindrischen Kalibrierkontur ausgerundet sind. Es sind mehrstufige Kalibrierwerkzeuge möglich, die beispielsweise durch eine Aufreihung mehrerer einzelner Kalibrier-Scheiben mit gleichen oder unterschiedlichen Durchmessern auf einem Dorn oder einem sonstigen Werkzeugträger gebildet sind. Als Kalibrierwerkzeug ist aber auch eine ganz einfache Kugel ohne weiteres möglich.

Die Kalibrierkonturen des ersten Kalibrierwerkzeugs und des zweiten Kalibrierwerkzeugs können gleiche oder unterschiedliche Außendurchmesser aufweisen, insbesondere gleiche oder unterschiedliche Maximal-Außendurchmesser. Mithin kann also beispielsweise das erste Kalibrierwerkzeug einen kleineren Außendurchmesser aufweisen als das zweite Kalibrierwerkzeug oder umgekehrt. Es ist z.B. vorteilhaft, wenn das erste Kalibrierwerkzeug einen kleineren Außendurchmesser aufweist, als das danach auf die Lageröffnung einwirkende zweite Kalibrierwerkzeug.

Das erste Kalibrierwerkzeug und/oder das zweite Kalibrierwerkzeug können bei dem Kalibriervorgang die Lageröffnung vollständig durchdringen. Es ist aber auch möglich, dass eines oder beide der Kalibrierwerkzeuge nur teilweise in die Lageröffnung eindringen, also beispielsweise nicht bis zum gegenüberliegenden freien Ende der Lageröffnung gelangen.

Eine besonders bevorzugte Ausführungsform der Erfindung sieht eine Art oszillierenden Betrieb vor. Beispielsweise ist die Positioniereinrichtung zur sequenziellen Positionierung des ersten Kalibrierwerkzeugs und/oder des zweiten Kalibrierwerkzeugs in der Lageröffnung ausgestaltet. Die Positioniereinrichtung führt mindestens eines der Kalibrierwerkzeuge nach dem Einführen des jeweils anderen Kalibrierwerkzeugs nochmals in die Lageröffnung ein. Somit gelangt also beispielsweise nacheinander das erste, dann das zweite, dann wiederum das erste und optional schließlich das zweite Kalibrierwerkzeug in die Lageröffnung hinein. Das kann auch noch häufiger geschehen. Es ist auch möglich, dass z.B. eines der ersten oder zweiten Kalibrierwerkzeuge mehrfach, z.B. zweimal, unmittelbar hintereinander in die Lageröffnung hinein fährt, bevor von der entgegengesetzten Seite her das andere Kalibrierwerkzeug in die Lageröffnung eindringt.

Ferner ist es möglich, dass z.B. das erste Kalibrierwerkzeug zumindest teilweise noch in Eingriff mit der Lageröffnung ist, wenn das zweite Kalibrierwerkzeug in die Lageröffnung eingeführt wird.

Mit einem Werkzeugträger, der zwei der ersten oder zweiten Kalibrierwerkzeuge trägt, lässt sich auch der folgende vorteilhafte Betrieb realisieren. Die Positioniereinrichtung ist zur Positionierung des mindestens einen Werkzeugträgers relativ zu der Lageröffnung derart ausgestaltet, dass zunächst eines der ersten Kalibrierwerkzeug in die Lageröffnung eindringt, dann von der entgegengesetzten Seite her mindestens eines der zweiten Kalibrierwerkzeuge in die Lageröffnung eindringt und schließlich das zweite der ersten Kalibrierwerkzeuge in die Lageröffnung eingeführt wird.

Eine bevorzugte Ausführungsform der Erfindung sieht vor, dass der Werkzeugträger mit einem freien Ende in die Lageröffnung einführbar ist und dem freien Ende gegenüberliegend keine Abstützung oder Führung des Werkzeugträgers vorgesehen ist. Der Werkzeugträger kann also frei in die Lageröffnung eingeführt werden.

An dieser Stelle sei bemerkt, dass es vorteilhaft ist, wenn dennoch eine Abstützung des Werkzeugträgers an seinem freien Ende vorgesehen ist, auch wenn dies nicht zwingend notwendig ist, jedoch die Kalibriergenauigkeit noch weiter verbessert.

Der Werkzeugträger und/oder das Kalibrierwerkzeug hat zweckmäßigerweise einen Schmiermittelkanal. Der Schmiermittelkanal oder die Schmiermittelkanäle münden zweckmäßigerweise im Bereich des Kalibrierwerkzeugs aus dem Werkzeugträger aus. Das Kalibrierwerkzeug hat vorzugsweise mindestens eine Austrittsöffnung für das Schmiermittel.

Weiterhin ist es zweckmäßig, wenn eine Schmiereinrichtung, insbesondere eine Minimalmengen-Schmiereinrichtung, vorgesehen ist.

Die Kalibriervorrichtung dient vorzugsweise dazu, eine Lageröffnung zu kalibrieren, deren freie Enden, z. B. zu Stirnseiten des Werkstücks oder einer Lagerbuchse hin, bezüglich der Kalibrierungsbahn in einer oder mehreren schräg verlaufenden Ebenen liegen. Ein Anwendungsgebiet ist die Kalibrierung sogenannter Korbhenkel-Pleuel oder sonstiger Pleuel, deren Lagerbuchsen mindestens eine schräge Stirnseite haben.

Eine Möglichkeit dazu ist beispielsweise, das Kalibrierwerkzeug im Bereich vor und/oder nach der Lager-Innenkontur abzustützen, z.B. das Kalibrierwerkzeug und/oder den dieses tragenden Werkzeugträger, beispielsweise ein sogenannter Kalibrierdorn, durch eine stützendes Bett oder durch eine Führung zu führen. Das Kalibrierwerkzeug oder der Werkzeugträger werden beispielsweise durch eine Führungshülse geführt.

Durch die Kalibrierung der Lageröffnung von zwei entgegengesetzten Seiten her ist jedoch eine derartige zusätzliche Führung des Kalibrierwerkzeugs nicht unbedingt notwendig. Wenn also beispielsweise das erste Kalibrierwerkzeug noch gewisse Erhöhungen oder Vertiefungen in der Lageröffnung hinterlässt, werden diese durch das zweite Kalibrierwerkzeug von der anderen Seite der Lageröffnung her wieder ausgeglichen. Mithin ist also die fehlende seitliche Abstützung des Kalibrierwerkzeugs (des ersten oder zweiten Kalibrierwerkzeug) bei so genannten Korbhenkel-Pleuel oder anderen, eine schräge Seitenkontur aufweisenden Lageröffnungen erfindungsgemäß dennoch mit gutem Erfolg zu kalibrieren.

Vorzugsweise weist das Kalibrierwerkzeug mindestens eine bezüglich der Kalibrierungsbahn vor oder hinter der mindestens einen Kalibrierkontur angeordnete Nebenkalibrierkontur zum Abstützen des Kalibrierwerkzeugs beim Kalibrieren durch die mindestens eine Kalibrierkontur an der Lager-Innenkontur in einer bezüglich der Kalibrierungsbahn schräg verlaufenden Ebene auf. Die mindestens eine Nebenkalibrierkontur und die mindestens eine Kalibrierkontur sind vorzugsweise gleichzeitig in stützendem und kalibrierendem Kontakt oder Eingriff mit der Lager-Innenkontur. Dabei ist ein Grundgedanke, dass bei einer beispielsweise ringförmigen Kalibrierkontur eine zusätzliche Nebenkalibrierkontur am Kalibrierwerkzeug vorhanden ist. Durch die Abstützung des Kalibrierwerkzeugs in einer bezüglich der Kalibrierungsbahn, vorzugsweise eine Linearachse, schräg verlaufenden Ebene ist es auch möglich, beispielsweise Lagerbuchsen in sogenannten Korbhenkel-Pleueln kalibrieren, ohne dass das freie Ende des das Kalibrierwerkzeug tragenden Werkzeugträgers unbedingt abgestützt werden muss. Das Kalibrierwerkzeug ermöglicht es, dass beispielsweise eine Lagerbuchse in einer Bohrung des Werkstücks, z.B. eines Pleuels, optimal angepresst und kalibriert wird. Beispielsweise ist die Nebenkalibrierkontur voreilend und/oder nacheilend bezüglich der Vorschubbewegung entlang der Kalibrierungsbahn.

Die mindestens eine Nebenkalibrierkontur stützt sich beispielsweise in einem Bereich der Lageröffnung an derselben ab, wo unterhalb oder oberhalb der schrägen Ebene keine stützende Fläche der Lageröffnung mehr vorhanden ist, beispielsweise weil die Lageröffnung eine schräge Stirnseiten hat oder sich zu ihren Öffnungen hin aufweitet, beispielsweise konisch. Der aufgeweitete Bereich kann z.B. nicht zu kalibrieren sein.

Es versteht sich, dass bezüglich der Kalibrierungsbahn vor und hinter der mindestens einen Kalibrierkontur jeweils eine Nebenkalibrierkontur vorgesehen sein kann. Es ist auch möglich, dass zwischen zwei Nebenkalibrierkonturen mehrere Kalibrierkonturen, zum Beispiel Kalibrierringe, vorgesehen sind.

Die mindestens eine Kalibrierkontur steht zweckmäßigerweise weiter vor einen Außenumfang des Kalibrierwerkzeugs vor als die mindestens eine Nebenkalibrierkontur. Die mindestens eine Nebenkalibrierkontur verhält sich also sozusagen passiv bezüglich des Kalibrierens.

Es ist aber auch möglich, dass die mindestens eine Nebenkalibrierkontur oder eine der Nebenkalibrierkonturen als eine weitere Kalibrierkontur ausgestaltet ist, wobei die mindestens eine Nebenkalibrierkontur und die mindestens eine Kalibrierkontur während der Bewegung des Kalibrierwerkzeugs entlang der Kalibrierungsbahn nacheinander in kalibrierendem Eingriff mit der Lager-Innenkontur sind. Die eine Kalibrierkontur bildet also beispielsweise zunächst die Nebenkalibrierkontur oder übt die Funktion der Nebenkalibrierkontur aus, während die andere Kalibrierkontur ihre Kalibrierfunktion leistet. Diese Rollen der beiden Konturen können jedoch auch im weiteren Verlauf der Kalibrierung vertauscht werden, das heißt dass die zunächst nur stützende Kalibrierkontur die Kalibrierung fortsetzt, während die vorher noch kalibrierende Kalibrierkontur zur Nebenkalibrierkontur wird. Dies wird beim in der Zeichnung dargestellten Ausführungsbeispiel noch deutlich.

Die mindestens eine Nebenkalibrierkontur ist vorzugsweise ringförmig. Auch die mindestens eine Kalibrierkontur ist vorzugsweise ringförmig. Die Kalibrierkontur und die Nebenkalibrierkontur können beispielsweise durch einen Ringkörper gebildet sein. Es versteht sich, dass mehrere derartige Ringkörper vorhanden sein können. Mehrere individuelle Ringkörper können miteinander zu dem Kalibrierwerkzeug kombiniert sein. Es ist auch möglich, dass das mindestens Ringkörper miteinander einstückig sind.

Die Nebenkalibrierkontur und/oder die Kalibrierkontur sind beispielsweise als Kugelsegment-Außenoberflächen ausgestaltet. Mithin können also beispielsweise die vorgenannten Ringe an ihrem radialen Außenumfang kugelförmig oder kugelsegmentförmig sein.

Das Kalibrierwerkzeug weist zweckmäßigerweise mindestens zwei bezüglich der Kalibrierungsbahn hintereinander angeordnete Ringe auf. Mindestens einer dieser Ringe weist die mindestens eine Nebenkalibrierkontur auf, während mindestens ein anderer Ring die mindestens eine Kalibrierkontur aufweist. An dieser Stelle sei erwähnt, dass auch beide Ringe die oder eine Kalibrierkontur aufweisen können. Während des Kalibriervorgangs ist der eine Ring zunächst der Nebenkalibrierring und der andere Ring der Kalibrierring. Diese Rollen kehren sich dann um. Selbstverständlich ist es vorteilhaft, wenn weitere, beispielsweise ausschließlich stützende Ringe und/oder ausschließlich kalibrierende Ringe, also Nebenkalibrierringe oder Kalibrierringe, vorgesehen sind.

Das Kalibrierwerkzeug weist zweckmäßigerweise mindestens zwei bezüglich der Kalibrierungsbahn hintereinander angeordnete Ringe auf, die jeweils die mindestens eine Kalibrierkontur aufweisen. Somit können also bezüglich der Kalibrierungsbahn nacheinander zwei Ringe die Lager-Innenkontur kalibrieren. Das Ergebnis ist dadurch besser.

Es ist auch möglich, dass mehrere Kalibrierkonturen bezüglich der Kalibrierungsbahn hintereinander angeordnet sind, die stufig zueinander sind. So ist es beispielsweise möglich, dass in Vorschubrichtung zunächst eine erste, einen kleineren Außenumfang aufweisende Kalibrierkontur in Eingriff mit der Lager-Innenkontur kommt und dann eine zweite Kalibierkontur mit einem größeren Außenumfang.

Das Kalibrierwerkzeug weist zweckmäßigerweise einen Kalibrierring auf, um dessen Außenumfang sich die mindestens eine Kalibrierkontur ringförmig erstreckt. Vor und/oder hinter dem Kalibrierring ist ein Nebenkalibrierkörper vorgesehen, an dem die mindestens eine Nebenkalibrierkontur vorgesehen ist, wobei sich diese Nebenkalibrierkontur nur teilringförmig über einen Teilumfang des Nebenkalibrierkörpers erstreckt. Der Nebenkalibrierkörper ist also beispielsweise teilringförmig.

Die ringförmige Kalibrierkontur und die teilringförmige Nebenkalibrierkontur sind vorzugsweise parallel zueinander, beispielsweise beide rechtwinkelig zur Kalibrierungsbahn. Sie können aber auch schräg zur Kalibrierungsbahn verlaufen.

Die mindestens eine Nebenkalibrierkontur kann beispielsweise schräg zur Kalibrierungsbahn verlaufen. Es ist aber auch möglich, dass die Nebenkalibrierkontur rechtwinkelig quer zur Kalibrierungsbahn verläuft.

Eine besonders bevorzugte Ausführungsform sieht vor, dass das Kalibrierwerkzeug bezüglich der Kalibrierungsbahn mindestens drei hintereinander angeordnete Ringe aufweist. Zwei Ringe sind beispielsweise als die mindestens eine Nebenkalibrierkontur aufweisende Nebenkalibrierringe ausgestaltet. Zwei Ringe können aber auch als die mindestens eine Kalibrierkontur aufweisende Kalibrierringe ausgestaltet sein. Eine Kombination ist möglich, z.B. mindestens zwei Nebenkalibrierringe und mindestens zwei Kalibrierringe.

Die Kalibriervorrichtung bildet vorzugsweise einen Bestandteil einer Werkzeugmaschine oder ist als eine Werkzeugmaschine ausgestaltet. Auch die Einbindung in ein mehrere Stationen umfassendes Bearbeitungszentrum zur Bearbeitung von Motorbauteilen, beispielsweise zur Pleuel-Bearbeitung, kann die erfindungsgemäße Kalibriervorrichtung aufweisen bzw. die Kalibriervorrichtung kann einen Bestandteil eines solchen Bearbeitungszentrums bilden. Die Werkzeugmaschine oder das Bearbeitungszentrum haben z.B. Mittel zum Einpressen einer Lagerbuchse in das Werkstück und/oder zur Herstellung, z.B. zum Bohren, der Lageröffnung. Das Bearbeitungszentrum weist beispielsweise zusätzliche Stationen zum Cracken, Fügen, Verschrauben und dergleichen weiteren Bearbeitung des Werkstücks auf.

Die Kalibriervorrichtung kann auch eine individuelle Baueinheit bilden oder eine Kalibrierstation darstellen, muss also nicht unbedingt in eine Werkzeugmaschine integriert sein oder einen Bestandteil eines Bearbeitungszentrums bilden.

Nachfolgend werden Ausführungsbeispiele der Erfindung anhand der Zeichnung erläutert. Es zeigen:
- Figur 1: eine Seitenansicht einer ersten Ausführungsform einer Kalibriervorrichtung mit einem ersten Kalibrierwerkzeug noch vor Eintritt in die Lageröffnung eines Werkstücks,
- Figur 2: ein Detail A aus Figur 1, wobei jedoch das Kalibrierwerkzeug die Lageröffnung bereits durchdrungen hat,

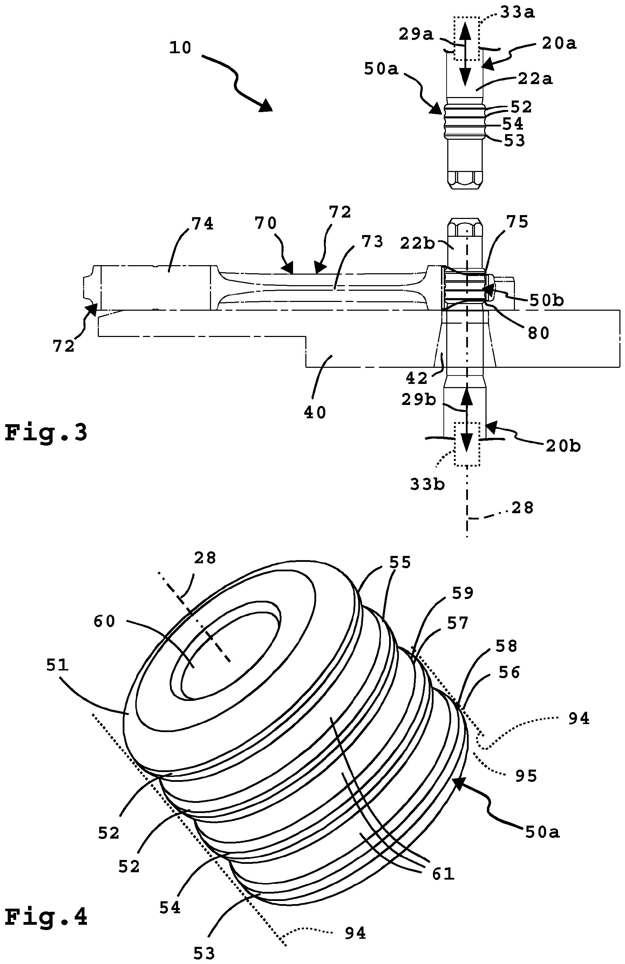

- Figur 3: eine Seitenansicht der Kalibriervorrichtung gemäß Figuren 1, 2 bei der Kalibrierung mit einem zweiten Kalibrierwerkzeug,
- Figur 4: eine perspektivische Detailansicht des Kalibrierwerkzeugs der Kalibriervorrichtung gemäß Figur 1,

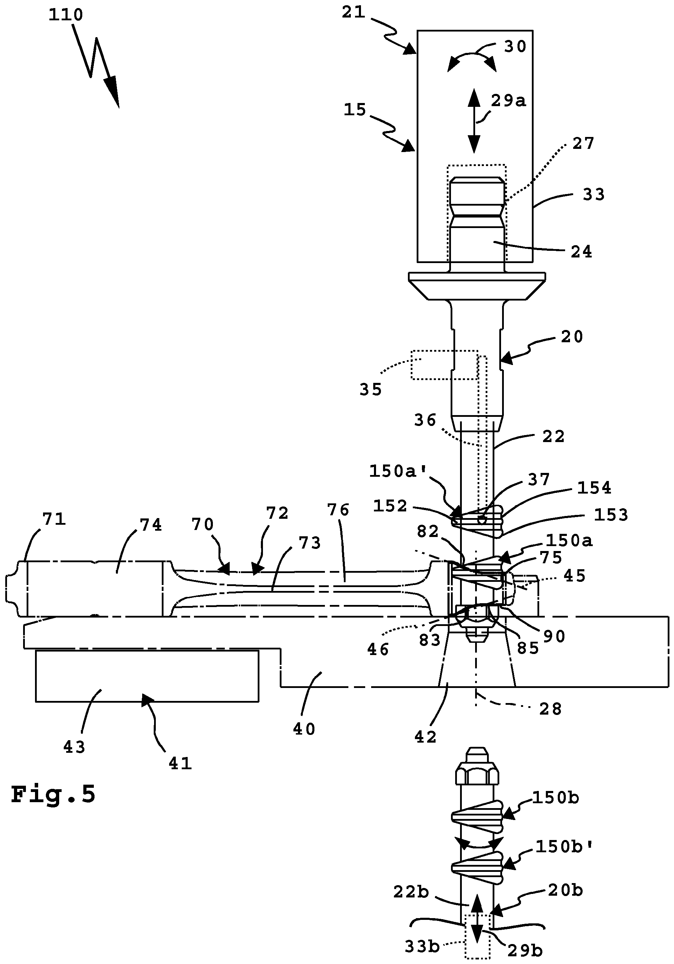

- Figur 5: die Kalibriervorrichtung gemäß Figuren 1-3, jedoch mit anderen Kalibrierwerkzeugen, von denen erste Kalibrierwerkzeuge in Eingriff mit der Lageröffnung des Werkstücks gezeigt sind,

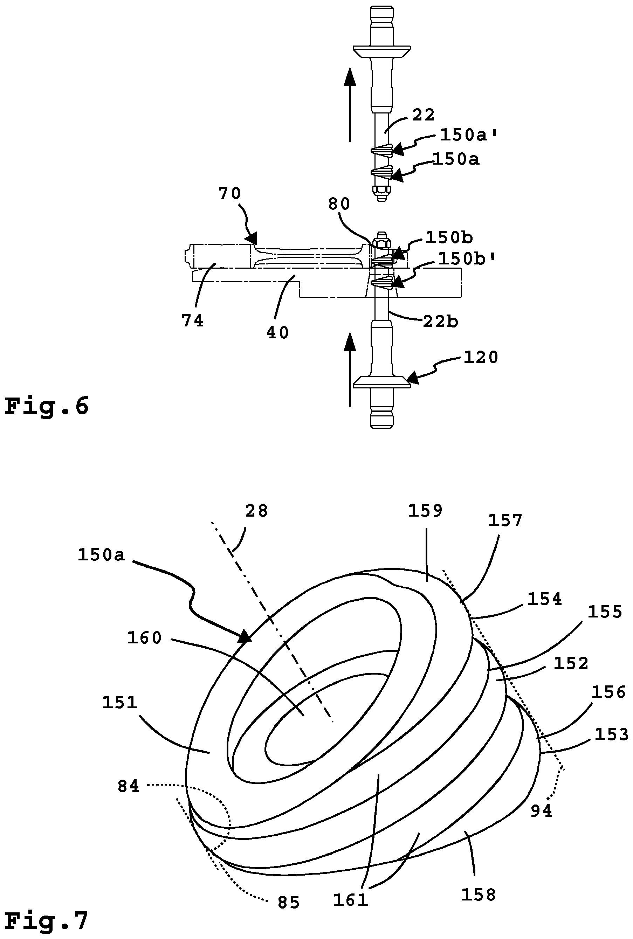

- Figur 6: die Kalibriervorrichtung gemäß Figur 5, jedoch mit den zweiten Kalibrierwerkzeugen in Eingriff mit der Lageröffnung,
- Figur 7: eine perspektivische Schrägansicht eines der Kalibrierwerkzeuge der Kalibriervorrichtung gemäß Figuren 5, 6,
- Figur 8: eine Querschnittsansicht eines Kalibriervorgangs mit einem Kalibrierwerkzeug zur Veranschaulichung von Problemen,
- Figur 9a-9b: einen Kalibriervorgang mit einem ersten und einem zweiten Kalibrierwerkzeug als schematische Querschnittsansicht,
- Figur 10: eine schematische Querschnittsansicht eines Kalibriervorgangs eines Werkstücks mit einer sozusagen monolithischen Lagerhülse mit unterschiedlichen Kalibrierwerkzeugen,
- Figur 11: eine weitere schematische Querschnittsansicht eines Kalibriervorgangs eines Werkstücks, jedoch mit einer mehrschichtigen Lagerhülse,
- Figur 12: eine schematische Querschnittsansicht eines Kalibriervorgangs eines Werkstücks in Gestalt eines Korbhenkel-Pleuels mit verschiedenen Kalibrierwerkzeug, und
- Figur 13: eine Querschnittsansicht eines Kalibriervorgangs eines Pleuels mit schräg verlaufenden Stirnseiten einer mehrlagigen Lagerhülse.

In der Zeichnung sind Kalibriervorrichtungen 10, 110 zum Kalibrieren von Werkstücken 70 dargestellt, die teilweise gleiche oder ähnliche Komponenten haben, die dann mit den selben Bezugsziffern versehen sind, gegebenenfalls mit einer Differenz von 100.

Bei den Werkstücken 70 handelt es sich um Motorbauteile 71, ganz konkret Pleuel 72. Die Pleuel 72 weisen einen Pleuelschaft 73 sowie zwei Lageröffnungen, nämlich ein so genanntes großes Auge 74 und ein kleines Auge 75 auf. Die Kalibriervorrichtungen 10 und 110 dienen zur Bearbeitung der Lageröffnung, die am kleinen Auge 75 vorgesehen ist. In eine Lageraufnahme 77 eines Grundkörpers 76 des Werkstücks 70, die am kleinen Auge 75 vorgesehen ist, ist in einem vorherigen Arbeitsschritt beispielsweise eine Lagerbuchse 80, mithin also ein Ringkörper, eingepresst worden.

Die Lagerbuchse 80 hat eine obere Stirnseite 82 sowie eine untere Stirnseite 83. Ein Innenumfang der Lagerbuchse 80 bildet eine Lageröffnung 85 und hat eine Lager-Innenkontur 84, die es zu kalibrieren gilt. Nach dem Einpressen der Lagerbuchse 80 ist nämlich die Lager-Innenkontur 84 noch nicht im gewünschten Umfang maßgenau. Ferner ist es vorteilhaft, wenn die Lagerbuchse 80 von der Lageröffnung 85 her nach radial außen in den Innenraum des kleinen Auges 75 gepresst wird, so dass sich dort die einander gegenüberliegenden Flächen des Pleuels 72 und der Lagerbuchse 80 optimal miteinander verbinden, quasi miteinander verzahnen. Dazu sind Kalibrierwerkzeuge 50 und 150 vorgesehen, die nachfolgend zur Unterscheidung ihrer Einwirkrichtung auf das Werkstück 70 als Kalibrierwerkzeuge 50a, 50b oder 150a, 150b bezeichnet werden. Die Kalibrierwerkzeuge 50a, 150a der Kalibriervorrichtungen 10, 110 sind an einem Werkzeugträger 20a angeordnet, die Kalibrierwerkzeuge 50b, 150b der Kalibriervorrichtungen 10, 110 sind an einem Werkzeugträger 20b angeordnet.

Die Werkzeugträger 20a, 20b umfassen Tragstäbe oder Dorne 22a, 22b, an dessen freien, von der Werkzeug-Positioniereinrichtung 21 entfernten Endbereichen, den freien Enden 25, Werkzeugaufnahmen 23 vorgesehen sind.

Das Werkstück 70 wird von einem Werkstückhalter 40 gehalten.

Die Kalibrierwerkzeuge 50a, 50b oder 150a, 150b und das Werkstück 70, insbesondere der Werkstückhalter 40, sind anhand einer Positioniereinrichtung 15 relativ zueinander positionierbar, um die Lager-Innenkontur 84 zu kalibrieren.

Die Werkzeugträger 20a, 20b sind durch eine Werkzeug-Positioniereinrichtung 21 der Positioniereinrichtung 15 positionierbar, nämlich Antriebe 33a, 33b, die einen oder mehrere Linearantriebe und/oder Drehantriebe aufweisen können. Ein Halteabschnitt 24, beispielsweise ein Schaft, eines Werkzeugträgers 20a, 20b ist in einer Werkzeugträger-Aufnahme 27 eines jeweiligen Antriebs 33a, 33b der Werkzeug-Positioniereinrichtung 21 aufgenommen.

Die Werkzeug-Positioniereinrichtung 21 kann die Dorne oder Tragstäbe 22a, 22b entlang der Kalibrierungsbahn 28 in einer Vorschubbewegung 29a, 29b zu dem Werkstückhalter 40 linear vor und zurück bewegen. Der Vorschubbewegung 29a, 29b kann eine Drehbewegung 30 überlagert sein oder die Vorschubbewegung 29a, 29b und die Drehbewegung 30 finden sequentiell statt.

Die Positioniereinrichtung 15 kann auch eine Werkstück-Positioniereinrichtung 41 umfassen, um den Werkstückhalter 40 und somit das dort daran gehaltene Werkstück 70 bzw. das Pleuel 72 relativ zu einem oder beiden Werkzeugträgern 20a, 20b der Kalibriervorrichtung 10, 110 zu positionieren. Beispielsweise umfasst die Werkstück-Positioniereinrichtung 41 einen oder mehrere Antriebe 43, z.B. Linearantriebe und/oder Drehantriebe oder dergleichen, zum Verstellen oder Antreiben des Werkstückhalters 40 zu einem oder beiden der beiden Werkzeugträger 20a, 20b hin oder davon weg. Auch beim Werkstückhalter 40 bzw. der Werkstück-Positioniereinrichtung 41 sind eine lineare Bewegung, entsprechend der Vorschubbewegungen 29a und/oder 29b, und/oder eine Drehbewegung , entsprechend der Drehbewegung 30, möglich. Die Drehbewegung und die lineare Bewegung sind sequentiell oder einander überlagert möglich.

Es ist möglich, dass Werkstück-Positioniereinrichtung 41 z.B. nur eine der Drehbewegung 30 entsprechende Drehbewegung leistet, die Werkzeug-Positioniereinrichtung 21 nur die Vorschubbewegungen 29a, 29b.

Die Werkzeugträger 20a, 20b dienen zum Tragen der Kalibrierwerkzeuge 50a, 50b der Kalibriervorrichtung 10 oder der Kalibrierwerkzeuge 150a, 150b der Kalibriervorrichtung 110. Beispielsweise durchdringt der Werkzeugträger 20a, 20b mit seinem freien Ende 25 zunächst die Lageröffnung 85 und führt dabei das Kalibrierwerkzeug 50a, 50b, 150a, 150b durch die Lageröffnung 85 hindurch, so dass die Lager-Innenkontur 84 kalibriert wird. Dabei durchdringt das freie Ende 25 beispielsweise eine Öffnung 42 am Werkstückhalter 40.

Unterhalb der Öffnung 42 kann optional eine Stütze oder Führung 26 vorgesehen sein, auf der sich der Werkzeugträger 20a mit seinem freien Ende 25 unterseitig abstützt oder an der der Werkzeugträger 20a unterhalb des Werkstückhalters 40 geführt ist. Dadurch ist die Vorschubbewegung 29a nicht nur durch die Werkzeug-Positioniereinrichtung 21, d.h. im Bereich des Halteabschnitts 24 geführt, sondern auch im Bereich des freien Endes 25. Wenn der Werkzeugträger 20b jedoch in die Lageröffnung 85 einfährt, ist die Führung 26 entfernt. Dann kann optional oberhalb der Lageröffnung 85 eine der Führung 26 baulich entsprechende Führung angeordnet sein (nicht dargestellt).

Zur weiteren Verbesserung der Kalibrierung dient auch beispielsweise eine Schmiervorrichtung 35, vorteilhaft eine Minimalmengenschmiervorrichtung, die über einen Kanal 36, der im Werkzeugträger 20a verläuft, Schmiermittel oder Kühlmittel zum Kalibrierwerkzeug 50a und/oder 50b oder 150a und/oder 150b fördert, welches an einer Austrittsöffnung 37 des Kalibrierwerkzeugs 50a, 50b oder 150a, 150b ausmündet. Selbstverständlich kann der Kanal 36 auch oberhalb oder unterhalb des Kalibrierwerkzeugs 50a, 50b oder 150a, 150b ausmünden, so dass dennoch das Schmiermittel in den Bereich des Kalibrierwerkzeugs 50a, 50b oder 150a, 150b während des Kalibrierens oder im Zusammenhang mit dem Kalibrieren gelangt.

Eine weitere Schwierigkeit bei dem Kalibrieren ergibt sich beispielsweise dadurch, dass die obere und die untere Stirnseite 82 und 83 der Lagerbuchse 80 quer zur Kalibrierungsbahn 28 jeweils einen Schrägverlauf bzw. eine gekrümmte Kontur haben.

Das Konzept der Kalibrierwerkzeug 50a oder 150a eignet sich dazu, trotz der schräg verlaufenden oberen und unteren Stirnseiten 82 und 83 der Lagerbuchse 80 eine optimale Kalibrierung zu leisten. Die Stütze und/oder Führung 26 ist zwar vorteilhaft, jedoch nicht notwendig.

Die Kalibrierwerkzeuge 50a und 50b sowie die Kalibrierwerkzeuge 150a, 150b sind jeweils baugleich. Nachfolgend werden vereinfacht die Kalibrierwerkzeuge 50a, 150a erläutert.

Die Kalibrierwerkzeuge 50a, 150a weisen Werkzeugkörper 51, 151 auf, an denen zum einen Kalibrierkonturen 52 und 152, zum andern Nebenkalibrierkonturen 53 und 54 bzw. 153 und 154 vorgesehen sind. Die Kalibrierkonturen 52, 152 dienen zum Kalibrieren der Lage-Innenkontur 84, d.h. zur Einstellung eines exakten Maßes der Lageröffnung 85.

Die Kalibrierwerkzeuge 50a und 150a weisen beispielsweise Kalibrierringe 55, 155 sowie Nebenkalibrierkörper 56, 57, 156, 157 auf. Die Nebenkalibrierkörper 56 und 57 sind als Nebenkalibrierringe 58 und 59 ausgestaltet, während die Nebenkalibrierkörper 156 und 157 sozusagen Teilringkörper 158, 159 darstellen. Die Kalibrierwerkzeuge 50a und 150a können also aus einzelnen Ringen aufgebaut sein, aber auch einstückig sein, das heißt einen durchgehenden Werkzeugkörper 51 bzw. 151 aufweisen, an dem dann die Kalibrierkonturen 52, 152 sowie die Nebenkalibrierkonturen 53, 54 bzw. 153, 154 vorgesehen sind.

Das Kalibrierwerkzeug 50a, 50b hat zwei bezüglich der Vorschubbewegung 29a, 29b nacheilende Kalibrierkonturen 52 bzw. zwei Kalibrierringe 55. Bezüglich der Kalibrierungsbahn 28 bzw. der Vorschubbewegung 29a, 29b vorauseilend sind neben dem einen der Kalibrierringe 55 Nebenkalibrierringe 58 und 59 angeordnet. Der Außenumfang der Nebenkalibrierringe 58 und 59 ist kleiner als derjenige der Kalibrierringe 55. Beispielsweise haben die Nebenkalibrierringe 58 und 59 und der sich daran anschließende Kalibrierring 55 stufig ansteigende Außendurchmesser, die beispielsweise um jeweils etwa 0,02-0,03 mm ansteigend sind, zum Beispiel bei einem Gesamt-Durchmesser von etwa 18-19 mm. Die beiden Kalibrierringe 55 haben vorzugsweise denselben Außendurchmesser, wirken also in gleichem Maße kalibrierend.

Es ist aber alternativ auch möglich, dass z.B. der obere Kalibrierring 55 einen größeren oder kleineren Außendurchmesser als der untere Kalibrierring 55 hat.

Das Kalibrierwerkzeug 150a hingegen hat nur einen, sozusagen zentralen Kalibrierring 155, dem in Bezug auf die Vorschubbewegung 29a, 29b ein Teilringkörper 158 vorgelagert ist, also die teilringförmige Nebenkalibrierkontur 153, und in Bezug auf die Vorschubbewegung 29a, 29b nacheilend die ebenfalls teilringförmige Nebenkalibrierkontur 154, die am Teilringkörper 159 vorgesehen ist.

Zur lösbaren Befestigung des Kalibrierwerkzeugs 50a, 50b, 150a, 150b am Werkzeugträger 20a dient eine Aufnahme 60, 160, zum Beispiel eine Bohrung. Die Aufnahme 60, 160 ist zur Befestigung an der Werkzeugaufnahme 23 des Werkzeugträgers 20a vorgesehen, zum Beispiel zum Einstecken des freien Endes 25 in die Aufnahmen 60, 160.

Die Kalibrierkonturen 52 und 152 und die Nebenkalibrierkonturen 53, 54 bzw. 153, 154 haben jeweils einen kugelsegmentförmigen Querschnitt. Zwischen den Kalibrierkonturen 52 und 152 und den Nebenkalibrierkonturen 53, 54 bzw. 153, 154 sind jeweils Vertiefungen 61, 161, beispielsweise in der Art von Einschnürungen oder Taillierungen, vorgesehen.

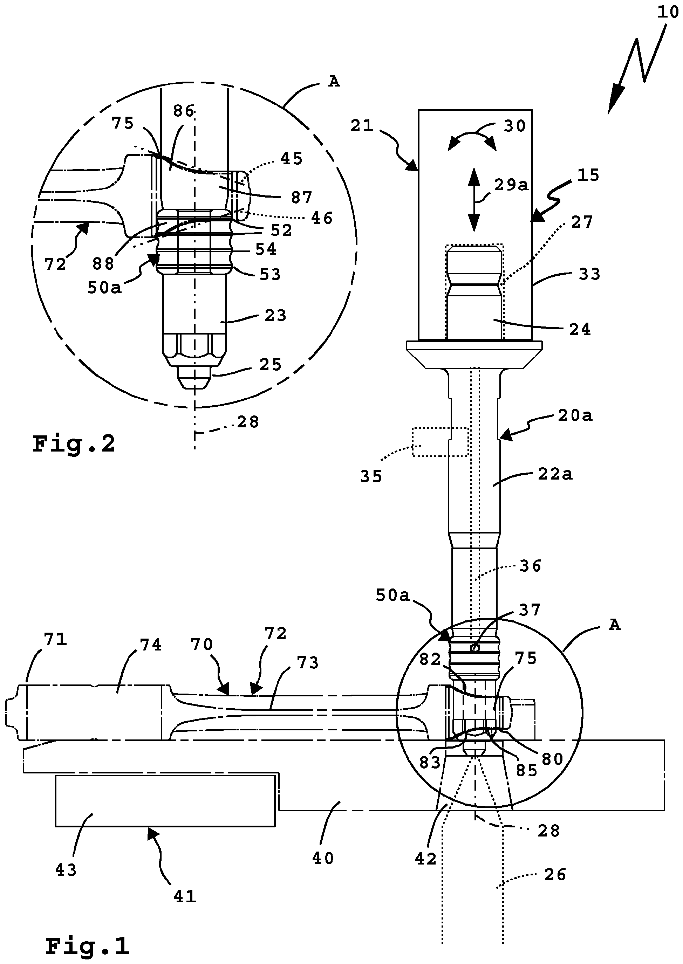

Der Kalibriervorgang mit dem Kalibrierwerkzeug 50a verläuft folgendermaßen. Ausgehend von beispielsweise der Position gemäß Figur 1 wird das Kalibrierwerkzeug 50a, 150a in die Lageröffnung 85 entlang der Kalibrierungsbahn 28 im Rahmen der Vorschubbewegung 29a hinein bzw. durch die Lageröffnung 85 hindurch bewegt, in der Zeichnung also von oben her. Dann wird das Kalibrierwerkzeug 50b, 150b von der entgegengesetzten Seite der Lageröffnung 85 her im Rahmen der Vorschubbewegung 29b hinein bzw. durch die Lageröffnung 85 hindurch bewegt.

Bei der Vorschubbewegung 29a, 29b des Kalibrierwerkzeugs 50a, 50b stützen sich zunächst die beiden Nebenkalibrierkonturen 53 und 54 an der Lager-Innenkontur 84 ab. Die Nebenkalibrierkonturen 53 und 54 können eine Vor-Kalibrierung durchführen, das heißt den Kalibriervorgang einleiten. Allerdings haben die Nebenkalibrierkonturen 53 und 54 einen kleineren Außendurchmesser als die Kalibrierkonturen 52, die nach den Nebenkalibrierkonturen 53 und 54 in Eingriff mit der Lager-Innenkontur 84 gelangen und diese kalibrieren.

Die näher bei den Nebenkalibrierkonturen 53 und 54 befindliche Kalibrierkontur 52 ist bei der Vorschubbewegung 29a, 29b entlang der Kalibrierungsbahn 28 zunächst in kalibrierendem Eingriff mit einem oberen, quer zur Kalibrierungsbahn 28 nur teilringförmigen und somit nicht ringförmig geschlossenen Bereich 86 der Lageröffnung 85, wobei allerdings während dieser Kalibrierung die Nebenkalibrierkonturen 53 und 54 möglicherweise nicht im ausreichenden Maße abstützend wirken. Der Kalibrierring 55 kann also in den dem Bereich 86 gegenüberliegenden offenen (in der Zeichnung rechts) Bereich ausweichen und den Bereich 86 der Lageröffnung 85 noch nicht im gewünschten Maß kalibrieren. Dennoch stützen bereits die Nebenkalibrierringe 58 und 59 das Kalibrierwerkzeug 50a bzw. die in der Zeichnung untere Kalibrierkontur 52 in einer bezüglich der Kalibrierungsbahn 28 schräg verlaufenden Ebene 45, nämlich im mittleren Bereich 87 der Lageröffnung 85, ab.

Es ist exemplarisch nur eine schräge Ebene 45 eingezeichnet. Selbstverständlich sind vorteilhaft weitere derartige schräge Ebenen vorhanden, auch in anderen Winkelstellungen bezüglich der Kalibrierungsbahn 28, weil ja die obere Stirnseite 82 keinen Diagonalverlauf hat, sondern einen gekrümmten Verlauf.

Wenn jedoch der den Nebenkalibrierringen 58, 59 nähere Kalibrierring 55 dann weiter in die Lageröffnung 85 eindringt (in der Zeichnung nach unten) stützt er sich im mittleren, vollständig ringförmigen geschlossenen Bereich 87 der Lageröffnung 85 ab, das heißt er kalibriert diesen Bereich 87 und wirkt gleichzeitig als ein Nebenkalibrierring oder eine Nebenkalibrierkontur für den weiteren (oberen) Kalibrierring 55, der dann den Bereich 86 kalibriert. Die Kalibrierringe 55 stützen sich in der Lageröffnung 85 also bezüglich mindestens einer bzw. mehreren schräg verlaufenden Ebenen 45 sozusagen wechselseitig ab.

Im weiteren Verlauf der Kalibrierung ändern sich dann die Rollen der beiden Kalibrierringe 55. Wenn nämlich der in der Zeichnung untere, näher bei den Nebenkalibrierringen 58, 59 befindliche Kalibrierring 55 in den unteren, ebenfalls nur teilringförmigen Bereich 88 der Lageröffnung 85 gelangt, ist der in der Zeichnung obere Kalibrierring 55 noch im mittleren Bereich 87 der Lageröffnung 85 und stützt sich dort optimal ab. Die Kalibrierringe 55 sind also in einer bezüglich der Kalibrierungsbahn 28 weiteren, zur Ebene 45 gegensinnig schräg geneigten schrägen Ebene 46 in Eingriff bzw. in kalibrierendem Kontakt mit der Lageröffnung 85. Der (in der Zeichnung obere) im Bereich 86 befindliche Kalibrierring 55 ist dann sozusagen ein Nebenkalibrierring oder eine Nebenkalibrierkontur für den (in der Zeichnung unteren) Kalibrierring 55, der in Eingriff mit dem Bereich 87 der Lageröffnung ist bzw. diesen kalibriert.

Selbstverständlich könnten noch weitere Kalibrierringe vorgesehen sein, was dann das Ergebnis verbessert. Im Prinzip ist das bei der Kalibriervorrichtung 110 realisiert, an deren Werkzeugträger 20a neben dem Kalibrierwerkzeug 150a ein weiteres Kalibrierwerkzeug 150a' vorgesehen ist, das vorzugsweise gleichartig ausgestaltet ist. Auch am anderen Werkzeugträger 20b können entsprechend zwei zweite Kalibrierwerkzeuge 150b und 150b' vorgesehen sein. Eine vorteilhafte Ausführungsform sieht dabei vor, dass zunächst die beiden vorderen Kalibrierwerkzeuge 150a und 150b die Lageröffnung 85 von den einander entgegengesetzten Seiten her kalibrieren und dann die weiteren Kalibrierwerkzeuge 150a' und 150b' die Kalibrierung sozusagen verfeinern.

Selbstverständlich könnten auch beispielsweise unterschiedliche Kalibrierwerkzeuge an einem Werkzeugträger 20a vorgesehen sein, zum Beispiel zunächst bezüglich der Vorschubrichtung der Vorschubbewegung 29a, 29b ein Kalibrierwerkzeug 150a und sodann ein weiteres Kalibrierwerkzeug 50a. Die Wirkungsweise der Kalibrierwerkzeuge 50a und 150a ist ähnlich, was nachfolgend deutlich wird.

Wenn bei dem Kalibriervorgang der Kalibriervorrichtung 110, das heißt bei der Vorschubbewegung 29a, 29b in Richtung der Lageröffnung 85 hinein, zunächst die sozusagen vorauseilende Nebenkalibrierkontur 153 bereits im mittleren Bereich 87 der Lageröffnung 85 ist und sich dort abstützt, kann sie bezüglich der schrägen Ebene 45 als eine Abstützung für den sich nunmehr im oberen Bereich 86 der Lageröffnung 85 befindlichen Kalibrierring 155 dienen. Dessen Kalibrierkontur 152 kann dann den Bereich 87 bereits kalibrieren.

Sodann durchläuft der Kalibrierring 155 den mittleren Bereich 87 und anschließend den in der Zeichnung unteren, ebenfalls nur teilweise ringförmigen Bereich 88. Dort kann sich der Kalibrierring 155 nicht mehr sozusagen selbst in der Lageröffnung 85 abstützen, da er unterhalb der unteren schrägen Ebene 46 teilweise sozusagen im Freien ist. Hier wirkt dann die obere Nebenkalibrierkontur 154, die in einem dem Bereich 88 gegenüberliegenden Abschnitt des mittleren Bereichs 86 in Berührkontakt bzw. sich abstützend an der Lageröffnung 85 anliegt.

Die Kalibrierung kann durch das weitere, sich im Rahmen der Vorschubbewegung 29a, 29b durch die Lageröffnung 85 hindurch bewegende Kalibrierwerkzeug 150' verbessert werden.

Die obigen Kalibrierwerkzeuge 50a-150b eignen sich zwar in besonderer Weise für die Kalibrierung von Lagerhülsen, die jeweils schräge Stirnseiten haben, d.h. dass die Kalibrierung einer Innenwand auf einer Seite bereits beginnt, wo gegenüberliegend noch keine Abstützung des Kalibrierwerkzeugs möglich ist. Die Kalibrierwerkzeuge 50a-150b ermöglichen es, die Lageröffnung 85 von einander entgegengesetzten Seiten her zu bearbeiten, was ein hervorragendes Kalibrierergebnis ergibt. Aber auch mit viel einfacheren Kalibrierwerkzeugen ist der erfindungsgemäße Ansatz, von einander entgegengesetzten Seiten her in die Lageröffnung kalibrierend einzugreifen, erfolgreich realisierbar.

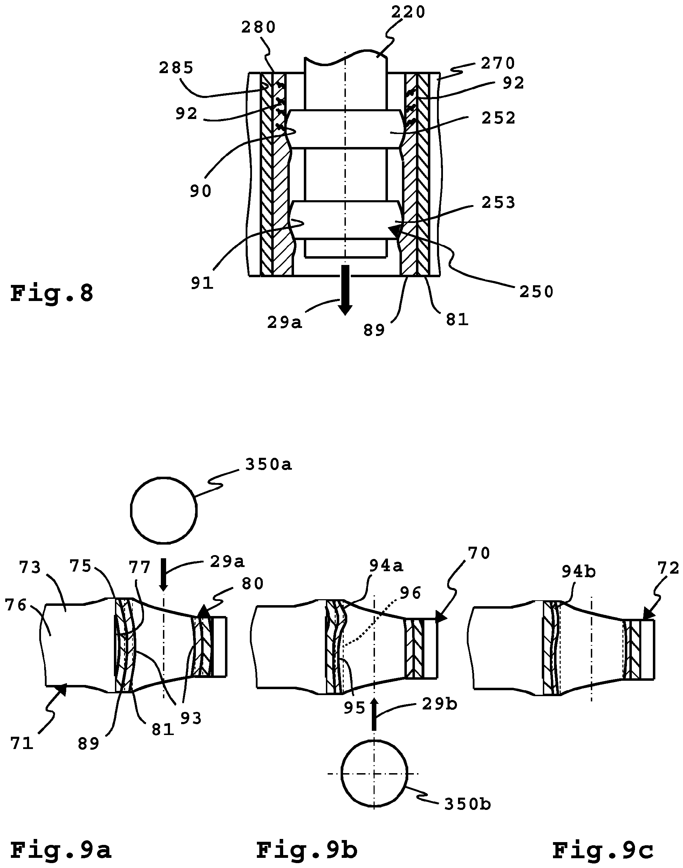

Insbesondere bei Lagerbuchsen, die mehrlagig sind, d.h. dass sie einen Buchsengrundkörper 81 und eine die Lageröffnung 85 bildende bzw. an ihrem Innenumfang bereitstellende Lagerschicht 89 aufweisen, erweist sich das erfindungsgemäße Kalibrieren als besonders vorteilhaft. Die Problematik bei einem Kalibrieren von nur einer Seite her ergibt sich aus der Darstellung gemäß Figur 8:
An einem Werkstück 270 ist beispielsweise eine Lagerbuchse 280 angeordnet, die zu kalibrieren ist. In einer Lageraufnahme des Werkstücks 70 ist also ein Buchsengrundkörper 81 gehaltert, der nach radial innen mit einer Lagerschicht 89 versehen ist. Das an einem Werkzeugträger 220 angeordnete Kalibrierwerkzeug 250 weist eine vordere Kalibrierkontur 253 und eine in Vorschubrichtung der Vorschubbewegung 29a hintere Kalibrierkontur 252, sozusagen eine Haupt-Kalibrierkontur auf. Man erkennt, dass die Kalibrierkontur 253 eine Verdichtung 91 schafft, die von der in Vorschubrichtung der Vorschubbewegung 29a nachfolgenden Kalibrierkontur 252 noch weiter verdichtet wird, so dass sich eine Verdichtung 90 ergibt. Dabei besteht die Gefahr, dass sich Risse 92 bilden.

Im Zusammenhang mit den Figuren 9a-9c wird nun deutlich, dass die Erfindung hier erfolgreich Abhilfe schafft. Beispielsweise wird durch das bereits erläuterte Werkstück 70 ein erstes Kalibrierwerkzeug 350a, zum Beispiel eine einfache Kugel, in einer ersten Vorschubbewegung 29a durchgeführt.

Durch das Einpressen einer Lagerbuchse 80 in die Lageraufnahme 77 des Werkstücks 70 ist nämlich zunächst eine Wölbung 93 entstanden, die durch das Kalibrierwerkzeug 350a kompensiert werden soll. Man erkennt, dass nach dem Kalibriervorgang durch das Kalibrierwerkzeug 350a diese Wölbung 93 praktisch beseitigt ist, allerdings sozusagen für den Preis, dass noch eine Aufwölbung 94a und eine sich daran anschließende Verdichtung 95 gebildet haben. Dies ist dem Umstand geschuldet, dass bei der Vorschubbewegung 29a das Kalibrierwerkzeug 350a in der Zeichnung rechts noch nicht durch eine Innenwand der Lagerbuchse 80 gestützt ist. Hier schafft der zweite Kalibriervorgang Abhilfe. Ein zweites Kalibrierwerkzeug 350b wird nämlich mit der entgegengesetzten Vorschubbewegung 29b in die Lageröffnung 85 von deren anderen Seite her eingeführt, so dass die Aufwölbung 94a deutlich geringer wird und nur noch eine kleine, schwächere Aufwölbung 94b verbleibt. Man erreicht also durch den zweiten Kalibriervorgang fast schon eine Idealkontur 96 (gestrichelt eingezeichnet).

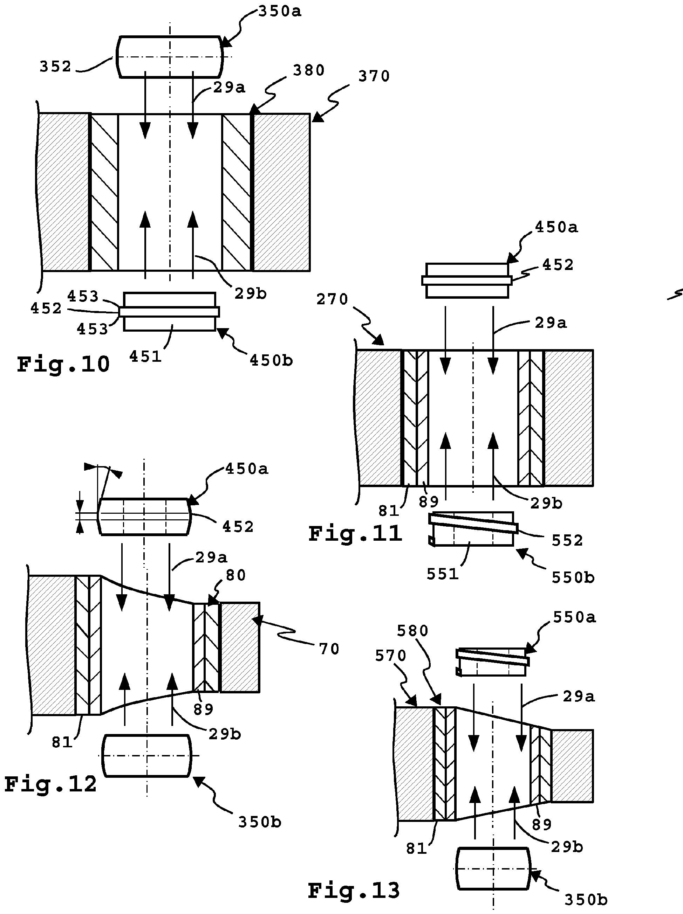

Anhand der Figuren 10-13 sollen noch unterschiedliche Werkstücke und Kalibrierwerkzeuge erläutert werden. Dabei sind gleiche oder gleichartige Komponenten mit denselben Bezugsziffern versehen. Die als erste Kalibrierwerkzeuge dienenden Kalibrierwerkzeuge sind jeweils mit dem Buchstaben "a" gekennzeichnet, die als zweite Kalibrierwerkzeuge dienenden Kalibrierwerkzeuge tragen den zusätzlichen Buchstaben "b".

Ein Kalibrierwerkzeug 350a weist beispielsweise eine kugelsegmentförmige Kalibrierkontur 352 auf, mit der erfolgreich im Rahmen einer ersten Vorschubbewegung 29a eine Lagerbuchse 380, die in einem Werkstück 370 steckt, kalibriert werden kann. Von der entgegengesetzten Seite her wird ein anderes Kalibrierwerkzeug 450b im Rahmen einer Vorschubbewegung 29b in die Lagerbuchse 380 eingeführt. Das Kalibrierwerkzeug 450b hat beispielsweise eine zylindrische Kalibrierkontur 452, die nach radial außen vor einen Werkzeugkörper 451 des Kalibrierwerkzeugs 450b vorsteht. Die zylindrische Kalibrierkontur 452 ist vorzugsweise an ihren bezüglich der Achsrichtung der Vorschubbewegung 29b vorderen und hinteren Kanten mit Rundungen 453 versehen.

Das Kalibrierwerkzeug 450 kann als ein erstes Kalibrierwerkzeug 450a beispielsweise auch in das bereits erläuterte Werkstück 270 mit der Lagerbuchse 280 eingeführt werden. An diesem Beispiel soll noch ein weiteres Kalibrierwerkzeug 550 erläutert werden, an dessen Werkzeugkörper 551 eine ringförmige Kalibrierkontur 552 vorgesehen ist. Dieses ein zweites Kalibrierwerkzeug 550b bildende Kalibrierwerkzeug 550 von der zu dem Kalibrierwerkzeug 450a entgegengesetzten Seite her im Rahmen einer Vorschubbewegung 29b in die Lageröffnung 85 eingeführt.

Das bereits erläuterte Werkstück 70 mit der Lagerbuchse 80 kann auch anhand des bereits erläuterten Kalibrierwerkzeugs 350b von beispielsweise der zweiten Seite her (Vorschubbewegung 29b) kalibriert werden, während von der anderen Seite her ein Kalibrierwerkzeug 450a in die Lageröffnung 85 eingeführt wird. Das Kalibrierwerkzeug 450a hat beispielsweise eine Kalibrierkontur 452 mit einer Facettierung.

Das Werkstück 70 ist beispielsweise ein so genanntes Korbhenkel-Pleuel. Ein in Figur 13 dargestelltes Werkstück 570, das mit einer mehrlagigen Lagerhülse oder Lagerbuchse 580 versehen ist, hat keine geschwungenen, sondern geradlinige jedoch schräg verlaufende Stirnseiten im Bereich seiner Lageröffnung. Entsprechend ist auch die Lagerbuchse 580 stirnseitig schräg verlaufen. Anhand der bereits erläuterten Kalibrierwerkzeuge 550 und 350 ist eine Kalibrierung der Lagerbuchse 580 von zwei entgegengesetzten Seiten her mit optimalem Ergebnis möglich.

## Patentansprüche

1. Kalibriervorrichtung zum Kalibrieren einer Lageröffnung (85) eines Werkstücks (70), insbesondere eines Motorbauteils (71), zum Beispiel eines Pleuels (72), mit Kalibrierwerkzeugen (50; 150), die ihrem Außenumfang mindestens eine Kalibrierkontur (52; 152) aufweisen, mit der eine als Lagerfläche dienende Lager-Innenkontur (84) der Lageröffnung (85) kalibrierbar ist, wobei zum Kalibrieren der Lageröffnung (85) die mindestens eine Kalibrierkontur (52; 152) durch eine Vorschubbewegung (29a, 29b) entlang einer Kalibrierungsbahn (28) an der Lager-Innenkontur (84) entlang bewegt wird, **dadurch gekennzeichnet, dass** die Kalibrierwerkzeuge (50, 150) ein erstes Kalibrierwerkzeug (50a, 150a) und ein zweites Kalibrierwerkzeug (50b, 150b) umfassen, und dass sie eine Positioniereinrichtung (15) zum Positionieren des Werkstücks (70) und der Kalibrierwerkzeuge (50; 150) bezüglich der Kalibrierungsbahn (28) relativ zueinander aufweist derart, dass das erste Kalibrierwerkzeug (50a; 150a) und das zweite Kalibrierwerkzeug (50b, 150b) von entgegengesetzten Seiten her in die Lageröffnung (85) hinein bewegt werden.

2. Kalibriervorrichtung nach Anspruch 1, **dadurch gekennzeichnet, dass** das erste Kalibrierwerkzeug (50a; 150a) und das zweite Kalibrierwerkzeug (50b, 150b) konturgleich oder baugleich sind oder voneinander verschiedene Konturen aufweisen.

3. Kalibriervorrichtung nach Anspruch 1 oder 2, **dadurch gekennzeichnet, dass** die mindestens eine Kalibrierkontur (52, 152) des ersten Kalibrierwerkzeugs (50a; 150a) und des zweiten Kalibrierwerkzeugs (50b, 150b) unterschiedliche Außendurchmesser aufweisen.

4. Kalibriervorrichtung nach einem der vorhergehenden Ansprüche, **dadurch gekennzeichnet, dass** das erste Kalibrierwerkzeug (50a; 150a) und/oder das zweite Kalibrierwerkzeug (50b, 150b) bei dem Kalibriervorgang die Lageröffnung (85) vollständig durchdringen oder nur teilweise in die Lageröffnung (85) eindringen.

5. Kalibriervorrichtung nach einem der vorhergehenden Ansprüche, **dadurch gekennzeichnet, dass** die Positioniereinrichtung (15) zur sequentiellen Positionierung des ersten Kalibrierwerkzeugs (50a; 150a) und/oder des zweiten Kalibrierwerkzeugs (50b, 150b) in der Lageröffnung (85) ausgestaltet ist, wobei sie mindestens eines der Kalibrierwerkzeuge (50a; 150a; 50b, 150b) nach dem Einführen des jeweils anderen Kalibrierwerkzeugs (50a; 150a; 50b, 150b) nochmals in die Lageröffnung (85) einführt.

6. Kalibriervorrichtung nach einem der vorhergehenden Ansprüche, **dadurch gekennzeichnet, dass** die Positioniereinrichtung (15) zur Positionierung des ersten Kalibrierwerkzeugs (50a; 150a) oder des zweiten Kalibrierwerkzeugs (50b, 150b) in der Lageröffnung (85) ausgestaltet ist, während das jeweils andere der zweiten oder ersten Kalibrierwerkzeuge (50a; 150a; 50b, 150b) noch in die Lageröffnung (85) ist.

7. Kalibriervorrichtung nach einem der vorhergehenden Ansprüche, **dadurch gekennzeichnet, dass** die Positioniereinrichtung eine Werkzeug-Positioniereinrichtung (21) zur Positionierung mindestens eines der Kalibrierwerkzeuge (50; 150) relativ zu dem Werkstück (70) und/oder eine Werkstück-Positioniereinrichtung (41) zur Positionierung des Werkstücks (70) relativ zu mindestens einem der Kalibrierwerkzeuge (50; 150) aufweist.

8. Kalibriervorrichtung nach einem der vorhergehenden Ansprüche, **dadurch gekennzeichnet, dass** sie mindestens einen insbesondere dornartigen Werkzeugträger (20a, 20b) zum Tragen mindestens eines der Kalibrierwerkzeuge (50; 150) aufweist.

9. Kalibriervorrichtung nach Anspruch 8, **dadurch gekennzeichnet, dass** an dem mindestens einen Werkzeugträger (20a, 20b) mindestens zwei erste Kalibrierwerkzeuge (50a; 150a) oder mindestens zwei zweite Kalibrierwerkzeugs (50a'; 150a') bezüglich der Kalibrierungsbahn (28) hintereinander angeordnet sind.

10. Kalibriervorrichtung nach Anspruch 8 oder 9, **dadurch gekennzeichnet, dass** die Positioniereinrichtung (15) zur Positionierung des mindestens einen Werkzeugträgers (20a, 20b) relativ zu der Lageröffnung (85) derart ausgestaltet ist, dass zunächst eines der ersten Kalibrierwerkzeuge (50a; 150a) in die Lageröffnung (85) eindringt, dann von der entgegengesetzten Seite her mindestens eines der zweiten Kalibrierwerkzeuge (50b, 150b) in die Lageröffnung (85) eindringt und anschließend das zweite der ersten Kalibrierwerkzeuge (50a; 150a) in die Lageröffnung (85) eindringt.

11. Kalibriervorrichtung nach einem der vorhergehenden Ansprüche, **dadurch gekennzeichnet, dass** mindestens eines der Kalibrierwerkzeuge (50; 150) mindestens eine bezüglich der Kalibrierungsbahn (28) vor oder hinter der mindestens einen, eine Haupt-Kalibrierkontur bildenden Kalibrierkontur (52; 152) angeordnete stützende Nebenkalibrierkontur (53, 54; 153, 154) zum Abstützen des Kalibrierwerkzeugs (50a; 150a) beim Kalibrieren durch die mindestens eine Kalibrierkontur (52; 152) an der Lager-Innenkontur (84) in einer bezüglich der Kalibrierungsbahn (28) schräg verlaufenden Ebene (45, 46) aufweist.

12. Kalibriervorrichtung nach Anspruch 11, **dadurch gekennzeichnet, dass** das Kalibrierwerkzeug (50a; 150a) einen Kalibrierring (55; 155), um dessen Außenumfang sich die mindestens eine Kalibrierkontur (52; 152) ringförmig erstreckt, und mindestens einen vor oder hinter dem Kalibrierring (55; 155) angeordneten Nebenkalibrierkörper (56, 57; 156, 157) aufweist, an dem die mindestens eine Nebenkalibrierkontur (53, 54; 153, 154) angeordnet ist und sich teilringförmig über einen Teilumfang des Nebenkalibrierkörpers (56, 57; 156, 157) erstreckt.

13. Kalibriervorrichtung nach Anspruch 12, **dadurch gekennzeichnet, dass** die ringförmige Kalibrierkontur (52; 152) und die teilringförmige Nebenkalibrierkontur (53, 54; 153, 154) parallel zueinander sind, insbesondere rechtwinkelig zu der Kalibrierungsbahn (28) und/oder die mindestens eine Nebenkalibrierkontur (53, 54; 153, 154) bezüglich der Kalibrierungsbahn (28) schräg verläuft.

14. Kalibriervorrichtung nach einem der vorhergehenden Ansprüche, **dadurch gekennzeichnet, dass** das erste Kalibrierwerkzeug (50a; 150a) oder das zweite Kalibrierwerkzeug (50b; 150b) bezüglich der Kalibrierungsbahn (28) mindestens zwei hintereinander angeordnete Kalibrierkonturen (52; 152) aufweist, deren Abstand bezüglich der Kalibrierungsbahn (28) so bemessen ist, dass sie gleichzeitig in die Lageröffnung (85) oder nicht gleichzeitig in die Lageröffnung (85) eingreifen.

15. Kalibrierverfahren zum Kalibrieren einer Lageröffnung (85) eines Werkstücks (70), insbesondere eines Motorbauteils (71), zum Beispiel eines Pleuels (72), mit einer Kalibriervorrichtung (10; 110), die Kalibrierwerkzeuge (50; 150) aufweist, die ihrem Außenumfang mindestens eine Kalibrierkontur (52; 152) aufweisen, mit der eine als Lagerfläche dienende Lager-Innenkontur (84) der Lageröffnung (85) kalibrierbar ist, wobei bei dem Kalibrierverfahren zum Kalibrieren der Lageröffnung (85) die mindestens eine Kalibrierkontur (52; 152) durch eine Vorschubbewegung (29a, 29b) entlang einer Kalibrierungsbahn (28) an der Lager-Innenkontur (84) entlang bewegt wird, **gekennzeichnet durch**: - Positionieren des Werkstücks (70) und der Kalibrierwerkzeuge (50; 150) bezüglich der Kalibrierungsbahn (28) relativ zueinander anhand einer Positioniereinrichtung (15), wobei ein erstes Kalibrierwerkzeug (50a; 150a) und ein zweites Kalibrierwerkzeug (50b, 150b) der Kalibrierwerkzeuge (50, 150) von entgegengesetzten Seiten her in die Lageröffnung (85) hinein bewegt werden.

## Claims

1. Calibration device for calibrating a bearing hole (85) of a workpiece (70), in particular of an engine component (71) such as a connecting rod (72), the device comprising calibration tools (50; 150) having on their outer circumference at least one calibration contour (52; 152), by means of which a bearing inner contour (84), serving as a bearing surface, of the bearing hole (85) can be calibrated, wherein, for the calibration of the bearing hole (85), the at least one calibration contour (52; 152) is moved along the bearing inner contour (84) by means of a feed movement (29a, 29b) along a calibration path (28), **characterised in that** the calibration tools (50, 150) comprise a first calibration tool (50a, 150a) and a second calibration tool (50b, 150b), and **in that** the device comprises a positioning device (15) for positioning the workpiece (70) and the calibration tools (50; 150) relative to one another in respect of the calibration path (28) in such a way that the first calibration tool (50a; 150a) and the second calibration tool (50b, 150b) are moved into the bearing hole (85) from opposite sides.

2. Calibration device according to claim 1, **characterised in that** the first calibration tool (50a; 150a) and the second calibration tool (50b, 150b) have identical contours or structures or have contours which are different from one another.

3. Calibration device according to claim 1 or 2, **characterised in that** the at least one calibration contour (52, 152) of the first calibration tool (50a; 150a) and the second calibration tool (50b, 150b) have different outer diameters.

4. Calibration device according to any of the preceding claims, **characterised in that** the first calibration tool (50a; 150a) and/or the second calibration tool (50b, 150b) penetrate(s) the bearing hole (85) completely or only partially in the calibration process.

5. Calibration device according to any of the preceding claims, **characterised in that** the positioning device (15) is designed for the sequential positioning of the first calibration tool (50a; 150a) and/or the second calibration tool (50b, 150b) in the bearing hole (85), introducing at least one of the calibration tools (50a; 150a; 50b, 150b) again into the bearing hole (85) after the introduction of the respective other calibration tool (50a; 150a; 50b, 150b).

6. Calibration device according to any of the preceding claims, **characterised in that** the positioning device (15) is designed for the positioning of the first calibration tool (50a; 150a) or the second calibration tool (50b, 150b) in the bearing hole (85) while the respective other of the second or first calibration tools (50a; 150a; 50b, 150b) is still in the bearing hole (85).

7. Calibration device according to any of the preceding claims, **characterised in that** the positioning device is a tool positioning device (21) for positioning at least one of the calibration tools (50; 150) relative to the workpiece (70) and/or a workpiece positioning device (41) for positioning the workpiece (70) relative to at least one of the calibration tools (50; 150).

8. Calibration device according to any of the preceding claims, **characterised in that** it comprises at least one in particular mandrel-type tool carrier (20a, 20b) for carrying at least one of the calibration tools (50; 150).

9. Calibration device according to claim 8, **characterised in that** at least two first calibration tool (50a; 150a) or at least two second calibration tool (50a'; 150a') are arranged one behind the other in respect of the calibration path (28) on the at least one tool carrier (20a, 20b).

10. Calibration device according to claim 8 or 9, **characterised in that** the positioning device (15) is designed in such a way for positioning the at least one tool carrier (20a, 20b) relative to the bearing hole (85) that at first one of the first calibration tools (50a; 150a) enters the bearing hole (85) and then at least one of the second calibration tools (50b, 150b) enters the bearing hole (85) from the opposite side, whereupon the second of the first calibration tools (50a; 150a) enters the bearing hole (85).

11. Calibration device according to any of the preceding claims, **characterised in that** at least one of the calibration tools (50; 150) comprises at least one auxiliary calibration contour (53, 54; 153, 154) located in respect of the calibration path (28) in front or behind the at least one calibration contour (52; 152) forming a main calibration contour for supporting the calibration tool (50a; 150a) in the calibration process by means of the at least one calibration contour (52; 152) on the bearing inner contour (84) in a plane (45, 46) which is inclined in respect of the calibration path (28).

12. Calibration device according to claim 11, **characterised in that** the calibration tool (50a; 150a) comprises a calibration ring (55; 155), along the outer circumference of which the at least one calibration contour (52; 152) extends in an annular arrangement, and at least one auxiliary calibration body (56, 57; 156, 157), which is located in front or behind the calibration ring (55; 155) and on which the at least one auxiliary calibration contour (53, 54; 153, 154) is located and extends along a section of the circumference of the auxiliary calibration body (56, 57; 156, 157) in a part-ring shape.

13. Calibration device according to claim 12, **characterised in that** the annular calibration contour (52; 152) and the part-ring shaped auxiliary calibration contour (53, 54; 153, 154) are parallel to one another, being in particular perpendicular to the calibration path (28), and/or **in that** the at least one auxiliary calibration contour (53, 54; 153, 154) is inclined in respect of the calibration path (28).

14. Calibration device according to any of the preceding claims, **characterised in that** the first calibration tool (50a; 150a) or the second calibration tool (50b; 150b) comprises at least two calibration contours (52; 152), which are arranged one behind the other in respect of the calibration path (28) and whose distance from the calibration path (28) is dimensioned such that they enter the bearing hole (85) simultaneously or not simultaneously.

15. Calibration method for calibrating a bearing hole (85) of a workpiece (70), in particular of an engine component (71) such as a connecting rod (72), using a calibration device (10; 110) comprising calibration tools (50; 150) having on their outer circumference at least one calibration contour (52; 152), by means of which a bearing inner contour (84), serving as a bearing surface, of the bearing hole (85) can be calibrated, wherein in the calibration method the at least one calibration contour (52; 152) is moved along the bearing inner contour (84) by means of a feed movement (29a, 29b) along a calibration path (28) for calibrating the bearing hole (85), **characterised by**:
- positioning the workpiece (70) and the calibration tools (50; 150) relative to one another in respect of the calibration path (28) using a positioning device (15), wherein a first calibration tool (50a; 150a) and a second calibration tool (50b, 150b) of the calibration tools (50, 150) are moved into the bearing hole (85) from opposite sides.

## Revendications

1. Dispositif d'étalonnage servant à étalonner une ouverture de palier (85) d'une pièce (70), en particulier d'un composant de moteur (71), par exemple d'une bielle (72), à l'aide d'outils d'étalonnage (50; 150), qui présentent, sur leur périphérie extérieure, au moins un contour d'étalonnage (52 ; 152), à l'aide duquel un contour intérieur de palier (84), faisant office de surface de palier, de l'ouverture de palier (85) peut être étalonné, dans lequel l'au moins un contour d'étalonnage (52 ; 152) est déplacé le long du contour intérieur de palier (84) par un déplacement d'avancement (29a, 29b) le long d'une trajectoire d'étalonnage (28) aux fins de l'étalonnage de l'ouverture de palier (85), **caractérisé en ce que** les outils d'étalonnage (50, 150) comprennent un premier outil d'étalonnage (50a, 150a) et un deuxième outil d'étalonnage (50b, 150b), et **en ce qu'**ils présentent un système de positionnement (15) servant à positionner la pièce (70) et les outils d'étalonnage (50 ; 150) par rapport à la trajectoire d'étalonnage (28) les uns par rapport aux autres, de telle manière que le premier outil d'étalonnage (50a ; 150a) et le deuxième outil d'étalonnage (50b, 150b) sont déplacés, depuis des côtés opposés, à l'intérieur de l'ouverture de palier (85).

2. Dispositif d'étalonnage selon la revendication 1, **caractérisé en ce que** le premier outil d'étalonnage (50a ; 150a) et le deuxième outil d'étalonnage (50b, 150b) sont identiques en termes de contour ou de structure ou présentent des contours différents les uns des autres.

3. Dispositif d'étalonnage selon la revendication 1 ou 2, **caractérisé en ce que** l'au moins un contour d'étalonnage (52, 152) du premier outil d'étalonnage (50a; 150a) et du deuxième outil d'étalonnage (50b, 150b) présentent des diamètres extérieurs différents.

4. Dispositif d'étalonnage selon l'une quelconque des revendications précédentes, **caractérisé en ce que** le premier outil d'étalonnage (50a ; 150a) et/ou le deuxième outil d'étalonnage (50b, 150b) traversent totalement l'ouverture de palier (85) lors de l'opération d'étalonnage ou pénètrent seulement en partie dans l'ouverture de palier (85).

5. Dispositif d'étalonnage selon l'une quelconque des revendications précédentes, **caractérisé en ce que** le système de positionnement (15) est configuré afin de positionner de manière séquentielle le premier outil d'étalonnage (50a; 150a) et/ou le deuxième outil d'étalonnage (50b, 150b) dans l'ouverture de palier (85), dans lequel il introduit au moins un des outils d'étalonnage (50a ; 150a ; 50b, 150b) à nouveau dans l'ouverture de palier (85) après l'introduction de respectivement l'autre outil d'étalonnage (50a ; 150a ; 50b, 150b).

6. Dispositif d'étalonnage selon l'une quelconque des revendications précédentes, **caractérisé en ce que** le système de positionnement (15) est configuré afin de positionner le premier outil d'étalonnage (50a ; 150a) ou le deuxième outil d'étalonnage (50b, 150b) dans l'ouverture de palier (85), tandis que l'autre respectivement des deuxièmes ou premiers outils d'étalonnage (50a ; 150a ; 50b, 150b) est encore dans l'ouverture de palier (85).

7. Dispositif d'étalonnage selon l'une quelconque des revendications précédentes, **caractérisé en ce que** le système de positionnement présente un système de positionnement d'outil (21) servant à positionner au moins un des outils d'étalonnage (50 ; 150) par rapport à la pièce (70) et/ou un système de positionnement de pièce (41) servant à positionner la pièce (70) par rapport à au moins un des outils d'étalonnage (50 ; 150).

8. Dispositif d'étalonnage selon l'une quelconque des revendications précédentes, **caractérisé en ce qu'**il présente au moins un support d'outil (20a, 20b) en particulier de type mandrin servant à supporter au moins un des outils d'étalonnage (50 ; 150).

9. Dispositif d'étalonnage selon la revendication 8, **caractérisé en ce qu'**au moins deux premiers outils d'étalonnage (50a ; 150a) ou au moins deux deuxièmes outils d'étalonnage (50a' ; 150a') sont disposés les uns derrière les autres par rapport à la trajectoire d'étalonnage (28) au niveau de l'au moins un support d'outil (20a, 20b).

10. Dispositif d'étalonnage selon la revendication 8 ou 9, **caractérisé en ce que** le système de positionnement (15) est configuré afin de positionner l'au moins un support d'outil (20a, 20b) par rapport à l'ouverture de palier (85) de telle manière que dans un premier temps un des premiers outils d'étalonnage (50a ; 150a) pénètre dans l'ouverture de palier (85), puis au moins un des deuxièmes outils d'étalonnage (50b, 150b) pénètre dans l'ouverture de palier (85) depuis le côté opposé et que le deuxième des premiers outils d'étalonnage (50a ; 150a) pénètre dans l'ouverture de palier (85) immédiatement après.

11. Dispositif d'étalonnage selon l'une quelconque des revendications précédentes, **caractérisé en ce qu'**au moins un des outils d'étalonnage (50 ; 150) présente au moins un contour d'étalonnage secondaire (53, 54 ; 153, 154) de soutien disposé, par rapport à la trajectoire d'étalonnage (28), devant ou derrière l'au moins un contour d'étalonnage (52 ; 152) formant un contour d'étalonnage principal, servant à soutenir l'outil d'étalonnage (50a ; 150a) lors de l'étalonnage par l'au moins un contour d'étalonnage (52 ; 152) au niveau du contour intérieur de palier (84) dans un plan (45, 46) s'étendant à l'oblique par rapport à la trajectoire d'étalonnage (28).

12. Dispositif d'étalonnage selon la revendication 11, **caractérisé en ce que** l'outil d'étalonnage (50a; 150a) présente au moins une bague d'étalonnage (55 ; 155), autour de la périphérie extérieure de laquelle s'étend l'au moins un contour d'étalonnage (52 ; 152) de manière à présenter une forme annulaire, et au moins un corps d'étalonnage secondaire (56, 57 ; 156, 157) disposé devant ou derrière la bague d'étalonnage (55 ; 155), au niveau duquel l'au moins un contour d'étalonnage secondaire (53, 54 ; 153, 154) est disposé et s'étend de manière à présenter une forme en partie annulaire sur une périphérie partielle du corps d'étalonnage secondaire (56, 57 ; 156, 157).

13. Dispositif d'étalonnage selon la revendication 12, **caractérisé en ce que** le contour d'étalonnage (52 ; 152) de forme annulaire et le contour d'étalonnage secondaire (53, 54 ; 153, 154) de forme en partie annulaire sont parallèles l'un par rapport à l'autre, en particulier perpendiculaires par rapport à la trajectoire d'étalonnage (28), et/ou **en ce que** l'au moins un contour d'étalonnage secondaire (53, 54 ; 153, 154) s'étend à l'oblique par rapport à la trajectoire d'étalonnage (28).

14. Dispositif d'étalonnage selon l'une quelconque des revendications précédentes, **caractérisé en ce que** le premier outil d'étalonnage (50a ; 150a) ou le deuxième outil d'étalonnage (50b; 150b) présente par rapport à la trajectoire d'étalonnage (28) au moins deux contours d'étalonnage (52; 152) disposés les uns derrière les autres, dont la distance par rapport à la trajectoire d'étalonnage (28) présente une dimension telle qu'ils viennent en prise simultanément avec l'ouverture de palier (85) ou de manière non simultanée avec l'ouverture de palier (85).

15. Procédé d'étalonnage servant à étalonner une ouverture de palier (85) d'une pièce (70), en particulier d'un composant de moteur (71), par exemple d'une bielle (72), à l'aide d'un dispositif d'étalonnage (10 ; 110), qui présente des outils d'étalonnage (50 ; 150), qui présentent, au niveau de leur périphérie extérieure, au moins un contour d'étalonnage (52 ; 152), à l'aide duquel un contour intérieur de palier (84), faisant office de surface de palier, de l'ouverture de palier (85) peut être étalonné, dans lequel l'au moins un contour d'étalonnage (52 ; 152) est déplacé le long du contour intérieur de palier (84) par un déplacement d'avancement (29a, 29b) le long d'une trajectoire d'étalonnage (28) lors du procédé d'étalonnage servant à étalonner l'ouverture de palier (85), **caractérisé par** l'étape qui suit consistant à :
- positionner la pièce (70) et les outils d'étalonnage (50; 150) par rapport à la trajectoire d'étalonnage (28) les uns par rapport aux autres à l'aide d'un système de positionnement (15), dans lequel un premier outil d'étalonnage (50a ; 150a) et un deuxième outil d'étalonnage (50b, 150b) des outils d'étalonnage (50, 150) sont déplacés à l'intérieur de l'ouverture de palier (85) depuis des côtés opposés.
